# EUROPEAN PATENT SPECIFICATION

(11) **EP 3 473 073 B1**
(45) Date of publication and mention of the grant of the patent: **14.07.2021**
(21) Application number: 18176573.6
(22) Date of filing: 07.06.2018
(51) Int. Cl.: A01D 34/81

(54) **MOWER APPARATUS**
MÄHERVORRICHTUNG
APPAREIL DE TONDEUSE

(30) Priority: 17.10.2017 JP 2017201071
(43) Date of publication of application: 24.04.2019
(73) Proprietor: Kubota Corporation, Osaka-shi, Osaka 556-8601 (JP)
(72) Inventor: TAKAOKA, Masaki, SAKAI-SHI, OSAKA, 5900823 (JP); TONOYA, Yoshihisa, SAKAI-SHI, OSAKA, 5900823 (JP); MIHARA, Akihito, SAKAI-SHI, OSAKA, 5900823 (JP); KIMURA, Arisa, SAKAI-SHI, OSAKA, 5900823 (JP); MATSUMOTO, Ryo, SAKAI-SHI, OSAKA, 5900823 (JP); KAGO, Tatsuki, SAKAI-SHI, OSAKA, 5900823 (JP); TOKUNAGA, Tatsuro, SAKAI-SHI, OSAKA, 5900823 (JP)
(74) Representative: Cabinet Beau de Loménie

(56) References cited:
- EP-A1- 2 878 189
- JP-A- 2015 065 885
- US-A1- 2014 075 913
- US-B2- 7 617 665

## Description

### BACKGROUND OF THE INVENTION

### 1. Field of the Invention

The present invention relates to the improvement of a mower apparatus used in a mowing machine that is used to mow lawn grass, weed, or the like.

### 2. Description of the Related Art

In this kind of mower apparatus, when a blade housing is formed, a corner portion on a ceiling side of the blade housing is formed by joining a sheet-metal top plate portion and a sheet-metal side plate portion to each other in a state of bring these portions into contact with each other substantially at the right angle. On an inner face side of this corner portion, a curved plate material, which curves while protruding toward the corner portion, is welded and fixed to the top plate portion and the side plate portion, and thus a curved face portion is provided on the inner face side of the corner portion (for example, see JP 2015-065885A).

The curved plate material is welded and fixed to the corner portion when forming a curved face needed in the corner portion of the blade housing as mentioned above, in order to reduce costs by selecting processing by means of welding of the curved plate material, because the cost of manufacturing a forming die tends to be very high if the entire blade housing is processed by means of press forming. This is an effective means for forming a curved face needed in the corner portion. However, there is room for improvement in terms of a large number of man-hours of welding and a lot of effort required for processing such as the joining of the top plate portion and the side plate portion, the welding of the curved plate material to the top plate portion and the side plate portion, resulting in difficulty in mass production.

The present invention is for providing a mower apparatus whose blade housing can be manufactured at low cost, while employing a structure that can be readily mass-produced using forming dies.
EP2878189 discloses a mower apparatus according to the preamble of claim 1.

### SUMMARY OF THE INVENTION

A mower apparatus according to the present invention comprises:
a pair of left and right rotary blades that are driven to rotate around a vertical axis;
a drive unit that transmits a driving force to the rotary blades; and
a blade housing that covers an upper side and an outer-circumferential side of the rotary blades;
wherein an upper corner portion of the blade housing, the upper corner portion corresponding to a portion at which a deck upper face and an outer-circumferential wall face of the blade housing are connected to each other, is constituted by a combination of divided corner members that are divided at a plurality of portions in a direction in which the rotary blades rotate, and
a curved face portion that curves toward rotation centers of the rotary blades, relative to the outer-circumferential wall face, the closer the curved face portion is to the deck upper face, is formed in each of the divided corner members.

According to the present invention, forming dies are employed to form the blade housing. The area in which the forming dies are employed is the upper corner portion that corresponds to a portion at which the deck upper face and the outer-circumferential wall face are connected, and is a combination of the divided corner members that are divided at a plurality of portions in the rotational direction of the rotary blades. With this configuration, the individual forming dies may be significantly smaller than those in the case of manufacturing the entire blade housing with a single forming die.

In addition, the curved face portion that is closer to the rotation centers of the rotary blades on the deck upper face with respect to the outer-circumferential wall face is formed in each of the divided corner members. With this configuration, when combining the divided corner members to form the blade housing, a curved face needed for the corner portion of the blade housing is formed only by connecting end portions of the divided corner members on the outer-circumferential wall face side and end portions of the divided corner members on the deck upper face side by means of welding. Accordingly, welding to connect the deck upper face and the outer-circumferential wall face of the blade housing is not required, making it possible to reduce the length of required weld line as much and simplify the processing.

In the above configuration, some of the divided corner members provided at a plurality of portions may be formed to have a shape capable of being used at a plurality of portions.

With this configuration, since some of the divided corner members are formed to have a shape that can be used at a plurality of portions, the number of dies needed to make the divided corner members can be reduced by the number of divided corner members that can be used at a plurality of portions, and the manufacturing cost can be reduced in this regard.

In the above configurations, adjacent ones of the divided corner members may be connected to each other by means of a joggle structure that is flush with the divided corner members on an inner face side of the blade housing.

With this configuration, although the divided corner members are combined to form the blade housing, steps between adjacent divided corner members are reduced, thereby allowing a smooth wind flow, and a structure with less sticking of mown grass can be readily achieved.

### BRIEF DESCRIPTION OF THE DRAWINGS

FIG. 1 is an overall side view of a passenger-type mowing machine;
FIG. 2 is an overall plan view of the passenger-type mowing machine;
FIG. 3 is a plan view of a mower apparatus;
FIG. 4 is a perspective view of the mower apparatus;
FIG. 5 is a front elevational view of the mower apparatus;
FIG. 6 is a plan view of an upper corner portion of a blade housing;
FIG. 7 is a partial cross-sectional view of connecting portions of the blade housing;
FIG. 8 is a side view of an attachment portion of an engine hood; and
FIG. 9 is a front elevational view of the attachment portion of the engine hood.

### DETAILED DESCRIPTION OF PREFERRED EMBODIMENTS

Hereinafter, an embodiment of the present invention will be described based on the drawings.

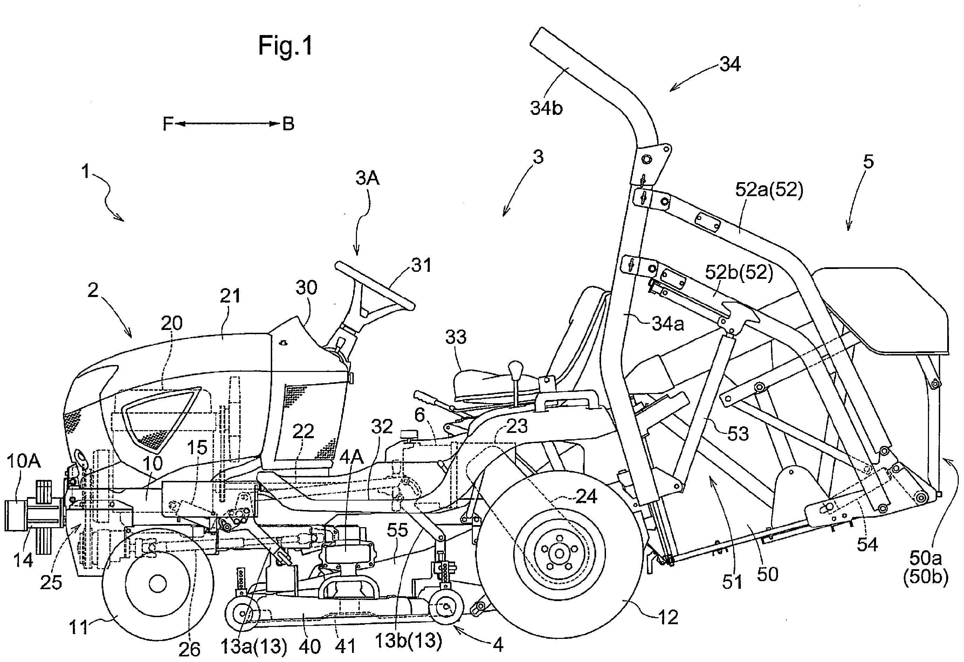

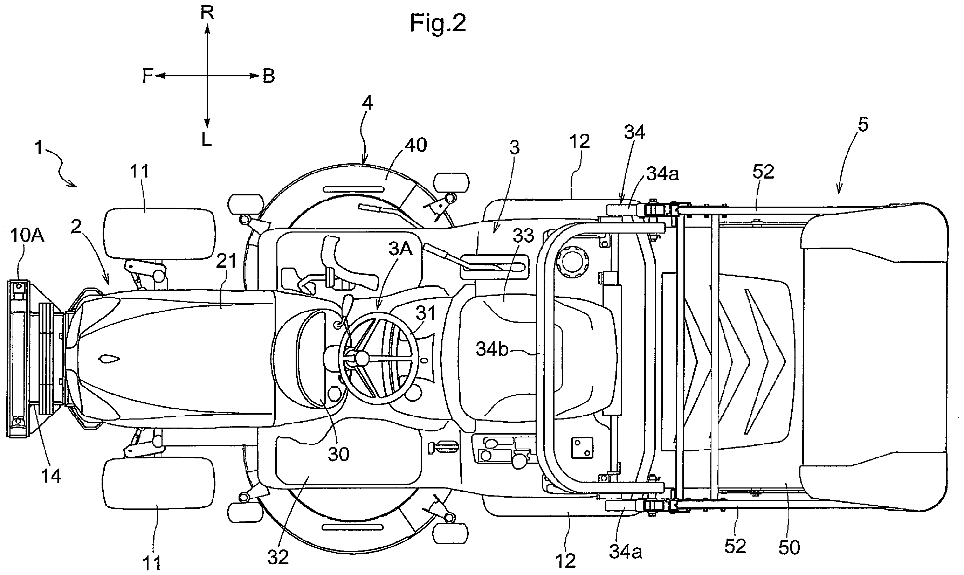

Note that the front-rear direction and the left-right direction in the description of this embodiment are as follows, unless otherwise stated. That is to say, "front/forward" refers to the direction (see the arrow F in FIG. 1) in which a passenger-type mowing machine to which the present invention is applied travels forward during work travel. "Rear/rearward" refers to the direction (see an arrow B in FIG. 1) in which the mowing machine travels reversely. "Right" refers to the direction (see an arrow R in FIG. 2) corresponding to the right side on the basis of a forward orientation relative to the front-rear direction. Similarly, "left" refers to the direction (see the arrow L in FIG. 2) corresponding to the left side.

### Overall configuration of passenger-type mowing machine

FIG. 1 shows an entire side face of a passenger-type mowing machine, which is an example of a work machine. This passenger-type mowing machine, which is a self-running machine, has a pair of left and right steerable front wheels 11 on the front side of a body frame 10 of a travelling body 1, and has a pair of left and right rear wheels 12 that can be driven, on the rear side.

A mower apparatus 4 of a rear-discharge type is attached in a suspended manner so as to be able to be raised and lowered, below the body frame 10 between the front wheels 11 and the rear wheels 12 in the front-rear direction. A grass collecting apparatus 5 for containing grass mown by the mower apparatus 4 is provided on the rear side of the travelling body 1.

As shown in FIGS. 1 and 2, a motor unit 2 is provided on a front portion of the body frame 10 of the travelling body 1, and a boarding-type operator unit 3 is provided on the rear side of the motor unit 2.

In the motor unit 2, an engine 20 is mounted on the body frame 10 while being contained in an engine hood 21. Motive power taken out from the rear side of the engine 20 is input to a transmission case 23 located at a rear position via a main transmission shaft 22, and motive power after being subjected to speed change in the transmission case 23 is output to a driving system for the rear wheels 12 and so on.

Motive power for work can be taken out from the front side of the engine 20. That is to say, a power take-off mechanism 25, which is constituted by a belt transmission mechanism, is provided on the front side of the engine 20, and motive power of the engine 20 is transmitted to a drive unit 4A in the mower apparatus 4 via a PTO shaft 26 provided in this power take-off mechanism 25.

The boarding-type operator unit 3 located on the rear side of the motor unit 2 is provided with a steering unit 3A, which includes a steering panel 30 that is continuous with the rear side of the engine hood 21, a steering wheel 31, and so on. An operator seat 33 is installed on the rear side of the steering unit 3A above a boarding step 32 that is located on the foot side, and a ROPS 34 is installed standing upright at a rear portion of the operator seat 33.

The ROPS 34 is formed to have a gate-like shape when seen in a front elevational view, and columnar leg portions 34a located on the left and right sides are connected and fixed, on the lower end side thereof, to a pair of left and right ROPS bases (not shown) that are integrally provided with a rear end portion of the body frame 10. The left and right columnar leg portions 34a are connected to each other on the upper end side thereof by a upper frame 34b that has a gate-like shape, and are provided in a state of covering the upper side of the operator seat 33.

A guard frame 10A, which serves as a protection member for a vehicle front portion, is provided in a front portion of the body frame 10.
This guard frame 10A is provided with a balancing weight attachment portion 14 to which a plurality of balancing weights can be attached.

### Grass collecting apparatus

As shown in FIGS. 1 and 2, the grass collecting apparatus 5 includes a grass collecting container 50 for containing mown grass, and a lifting drive mechanism 51 for operating the grass collecting container 50 so as to enable the grass collecting container 50 to perform rising and lowering operations and a mown grass discharging operation with respect to the travelling body 1.

The grass collecting container 50 has a receiving port (not shown) for receiving mown grass supplied from the mower apparatus 4 via a conveyance duct 55 on the front end side, and has a discharge port 50a for discharging mown grass and an openable lid 50b that covers the discharge port 50a on the rear end side.

The lifting drive mechanism 51 includes a lifting link 52, a lift cylinder 53 (which corresponds to a hydraulic actuator), and a dump cylinder 54 (which corresponds to a hydraulic actuator). The lifting link 52 connects the grass collecting container 50 to the ROPS 34 provided on the rear side of the travelling body 1. The lift cylinder 53 raises and lowers the lifting link 52 relative to the ROPS 34. The dump cylinder 54 changes the orientation of the grass collecting container 50 relative to the lifting link 52 from a collecting orientation, which is close to a horizontal orientation, to a rearward inclined orientation, and opens and closes the openable lid 50b of the grass collecting container 50.

The lifting link 52 includes a pair of left and right upper links 52a and a pair of left and right lower links 52b. The front end side of the upper links 52a and the front end side of the lower links 52b are connected to an upper portion of the ROPS 34 in a detachable manner. The rear side of the upper links 52a and the rear side of the lower links 52b are connected to a lower portion of the grass collecting container 50 close to a rear end thereof. An upper end portion of the lift cylinder 53, which is constituted by a hydraulic cylinder, is connected to the lower links 52b. As a result of extending and retracting operations of the lift cylinder 53, the lifting link 52 pivots to raise and lower the grass collecting container 50.

The dump cylinder 54, which is constituted by a hydraulic cylinder, is arranged below the rear end side of the grass collecting container 50. One end portion of the dump cylinder 54 is connected to a known dump operation mechanism (not shown) so as to be able to switch the grass collecting container 50 between a discharging orientation with which the grass collecting container 50 is inclined rearward in an inversed manner and the collecting orientation that is close to a horizontal orientation, by extending and retracting operations of the dump cylinder 54.

The aforementioned lift cylinder 53 and the dump cylinder 54 are also provided on each of the left and right sides, and are arranged in a hydraulic circuit so as to be able to operate simultaneously on the left and right sides.

### Mower apparatus

The mower apparatus 4 includes a blade housing 40 that is supported in a suspended manner via a link mechanism 13 provided with a pair of left and right front links 13a and a pair of left and right rear links 13b, so that the blade housing 40 can be raised and lowered relative to the body frame 10.

A mower lifting cylinder 15 is connected to upper end portions of the front links 13a in the link mechanism 13. The height position in the vertical direction of the blade housing 40 relative to the body frame 10 can be changed in accordance with extending and retracting operations of the mower lifting cylinder 15.

The drive unit 4A to which motive power transmitted from the PTO shaft 26 is input is provided in an upper portion of the blade housing 40. Although not shown in the diagrams, a gear interlock mechanism for dividing motive power transmitted from the PTO shaft 26 and transmitting the divided motive power to left and right rotary blades 41 is contained in the drive unit 4A.

The pair of left and right rotary blades 41 are installed within the blade housing 40. The rotary blades 41 rotate around a vertical axis, reap grasses by being driven to rotate at a constant speed with the respective rotational trajectories partially overlapping, and discharge mown grasses rearward from a discharge port 42, which is formed in a rear portion of the blade housing 40, using conveyance wind generated by the rotational movement of the rotary blades 41.

### Blade housing

The blade housing 40 is configured as follows.

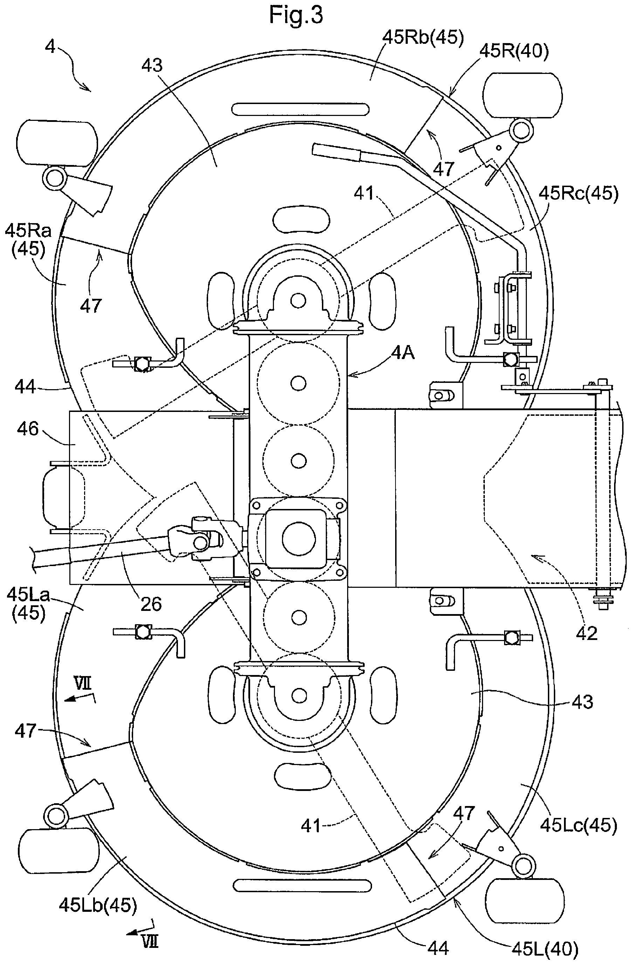

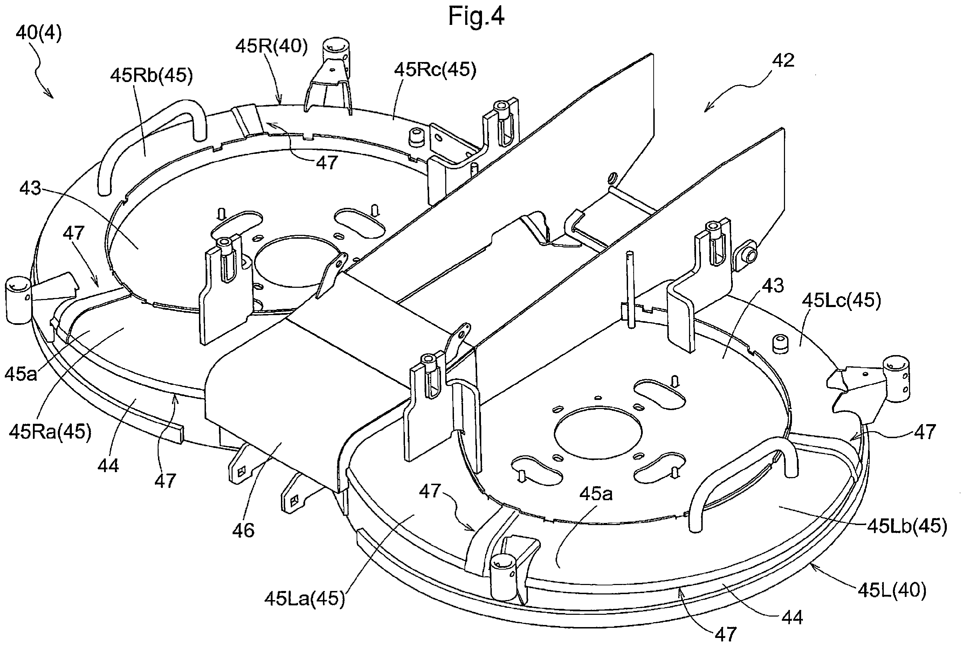

As shown in FIGS. 3 to 7, the blade housing 40 surrounds a mowing space that is formed within the blade housing 40 as a result of top plates 43 (each corresponding to a deck upper face), side plates 44 (each corresponding to an outer-circumferential wall face), and an upper corner portion 45 being combined. The top plates 43 cover the upper side of the rotary blades 41 in a state where the drive unit 4A is mounted. The side plates 44 are located on an outer-circumferential side of the rotational trajectories of the rotary blades 41. The upper corner portion 45 connects the side plates 44 to the top plates 43.

Each of the top plate 43 is made of a sheet metal that is formed to have a disk shape whose diameter is slightly smaller than the diameter of the rotational trajectory of each rotary blade 41 when seen in a plan view. A pair of left and right top plates 43 is provided so as to be located on the upper side of the left and right rotary blades 41. A center shielding plate 46, which covers the upper side of a mown grass passage leading to the discharge port 42, is provided between the left and right top plates 43.

Each of the side plate 44 is made of a sheet metal that is formed to substantially have an arc shape when seen in a plan view, with a diameter slightly greater than the diameter of the rotational trajectory of each rotary blade 41.

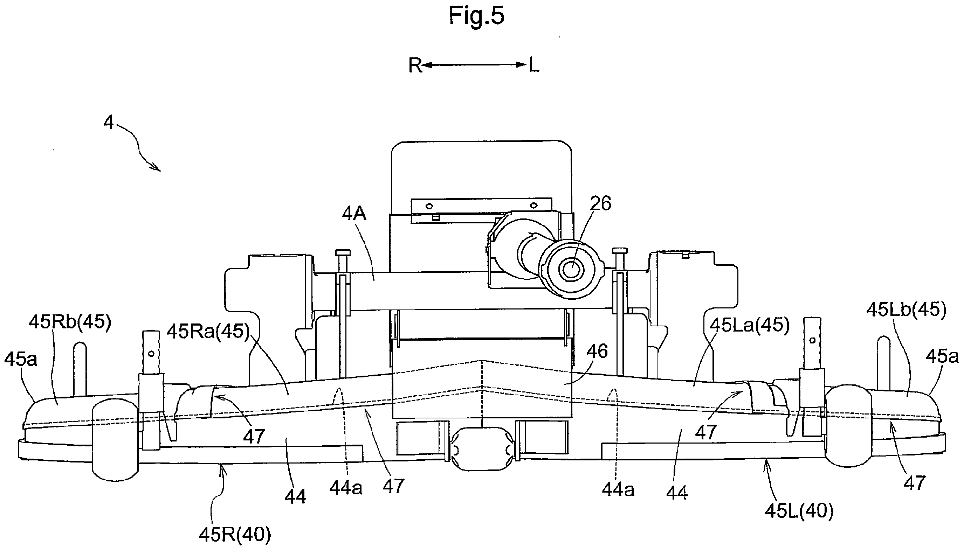

As shown in FIG. 5, the height of an upper edge 44a of each side plate 44 is greater on the center side in the left-right direction when seen from in a front elevational view, and gradually decreases toward both end sides. The higher portion on the center side is continuous with the mown grass passage leading to the discharge port 42.

The upper corner portion 45 is formed using press forming dies. In the upper corner portion 45, a curved face portion 45a for connecting the side plates 44 to the top plates 43 with a smooth curved face is formed so that the closer the curved face portion 45a is to the top plate 43 relative to the side plate 44, the curved face portion 45 curves toward the rotation centers of the rotary blades 41.

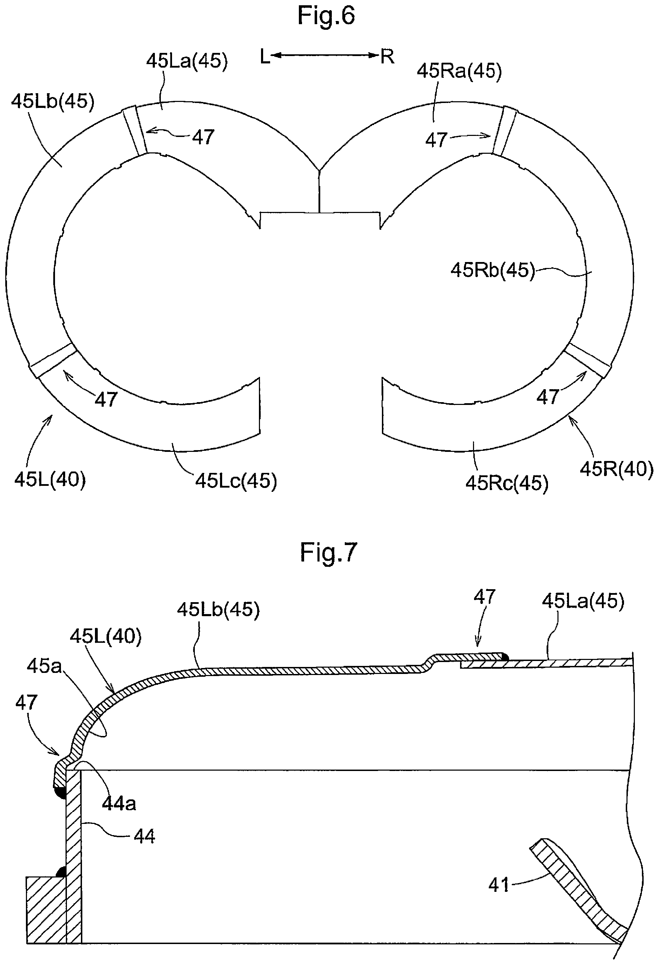

As shown in FIGS. 3 and 6, the upper corner portion 45 is formed with a combination of six divided corner members 45Ra, 45Rb, 45Rc, 45La, 45Lb, and 45Lc. Three divided corner members 45Ra, 45Rb, and 45Rc, which are located on the right side, constitute a right upper corner portion 45R that covers around an upper portion of the right rotary blade 41. Three divided corner members 45La, 45Lb, and 45Lc, which are located on the left side, constitute a left upper corner portion 45L that covers around an upper portion of the left rotary blade 41.

Out of the aforementioned divided corner members 45Ra, 45Rb, 45Rc, 45La, 45Lb, and 45Lc, a pair of divided corner members 45Rb and 45Lb that are located on both end portions in the left-right direction are formed using the same press forming die. The right divided corner member 45Rb and the left divided corner member 45Lb are attached in an inverted manner in the front-rear direction.

The divided corner member 45Ra on the front right side, the divided corner member 45La on the front left side, the divided corner member 45Rc on the rear right side, and the divided corner member 45Lc on the rear left side are separately formed using different press forming dies.

Thus, the upper corner portion 45 of the blade housing 40 that contains the pair of left and right rotary blades 41 is constituted by the six divided corner members 45Ra, 45Rb, 45Rc, 45La, 45Lb, and 45Lc that are formed using five types of press forming dies.

At portions at which the divided corner members 45Ra, 45Rb, 45Rc, 45La, 45Lb, and 45Lc are connected to each other in the circumferential direction, the adjacent divided corner members are connected by means of joggle structures 47 that are flush with the divided corner members on the inner face side of the blade housing 40 as shown in FIGS. 6 and 7, thereby avoiding steps being formed at the connecting portions.

With this configuration, it is less likely that a flow of swirling wind generated by the rotary blades 41 is disturbed by steps at the portions at which the divided corner members 45Ra, 45Rb, 45Rc, 45La, 45Lb, and 45Lc are connected to each other.

The divided corner members 45Ra, 45Rb, 45Rc, 45La, 45Lb, and 45Lc are also connected to the upper edges 44a of the side plates 44 by means of the joggle structures 47. Accordingly, steps between the divided corner members 45Ra, 45Rb, 45Rc, 45La, 45Lb, and 45Lc and the upper edges 44a of the side plates 44 are eliminated, and thus mown grass and dust are unlikely to deposit.

### Hood support structure (does not correspond to the claimed invention)

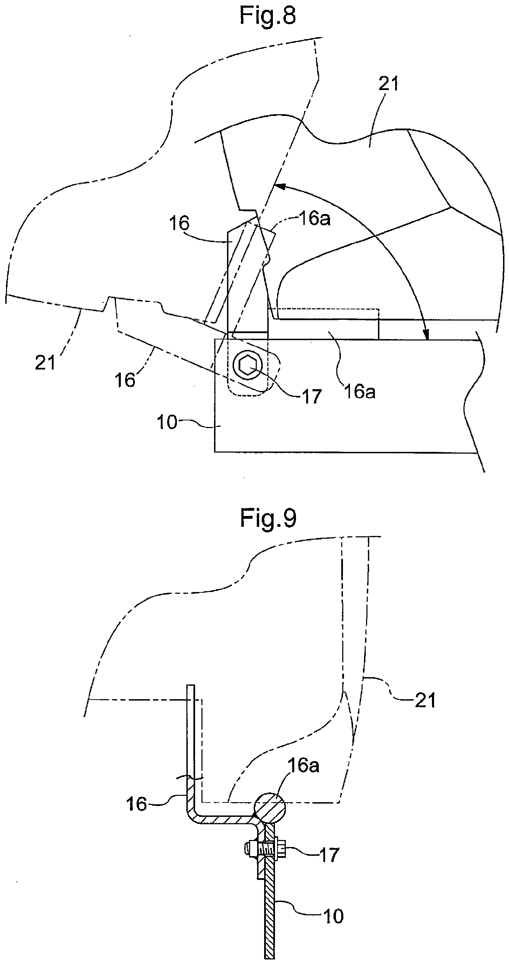

As shown in FIGS. 8 and 9, a front end portion of the engine hood 21 is supported by a front portion of the body frame 10 via an attachment bracket 16.

The attachment bracket 16 is connected to the front portion of the body frame 10 by one attachment bolt 17 so as to be able to pivot to open and close. That is to say, the engine hood 21 is attached so as to pivot around a pivot fulcrum, which is the attachment bolt 17, on the front side thereof to open and close on the rear side.

A short round bar 16a is welded and fixed to the aforementioned attachment bracket 16 at a position on a lateral side portion thereof, the position opposing an upper edge of the body frame 10. The position of the round bar 16a is set so that the round bar 16a comes into contact with the upper edge of the body frame 10 when the engine hood 21 is in a closed state. Accordingly, the position of the attachment bracket 16 is restricted at two points, namely at the attachment bolt 17 and the portion at which the round bar 16a that opposes the upper edge of the body frame 10 comes into contact therewith, and the attachment bracket 16 supports the closed orientation of the engine hood 21 in a less loose state.

### Variation 1

The embodiment has described, as an example, the upper corner portion 45 having a structure in which the six divided corner members 45Ra, 45Rb, 45Rc, 45La, 45Lb, and 45Lc are combined. However, the present invention is not limited thereto. For example, a structure that is divided into eight or more, or four or less, may be employed.

As for the other configuration, the same configuration as that in the above embodiment may be employed.

### Variation 2

The embodiment has described, as an example, a structure in which the joggle structures 47 are used for connection at the portions at which the divided corner members 45Ra, 45Rb, 45Rc, 45La, 45Lb, and 45Lc are connected to the upper edges 44a of the side plates 44, as well as the portions at which the divided corner members 45Ra, 45Rb, 45Rc, 45La, 45Lb, and 45Lc are connected to each other in the circumferential direction. However, the present invention is not limited to this structure.

For example, a connection structure using the joggle structures 47 may alternatively be employed at only one of the portions at which the divided corner members 45Ra, 45Rb, 45Rc, 45La, 45Lb, and 45Lc are connected to each other in the circumferential direction and the portions at which the divided corner member 45Ra, 45Rb, 45Rc, 45La, 45Lb, and 45Lc are connected to the upper edges 44a of the side plates 44.

As for the other configuration, the same configuration as that in the above embodiment may be employed.

### Variation 3

The mower apparatus according to the present invention is applicable to various kinds of mowing machines ranging from large machines to small machines.

### Description of Reference Signs

- 4: Mower apparatus
- 4A: Drive unit
- 40: Blade housing
- 41: Rotary blade
- 43: Deck upper face
- 44: Outer-circumferential wall face
- 45: Upper corner portion
- 45a: Curved face portion
- 45Ra: Divided corner member
- 45Rb: Divided corner member
- 45Rc: Divided corner member
- 45La: Divided corner member
- 45Lb: Divided corner member
- 45Lc: Divided corner member
- 47: Joggle structure

## Claims

1. A mower apparatus (4) comprising:
a pair of left and right rotary blades (41) that are driven to rotate around a vertical axis;
a drive unit (4A) that transmits a driving force to the rotary blades (41); and
a blade housing (40) that covers an upper side and an outer-circumferential side of the rotary blades (41);
an upper corner portion (45) of the blade housing (40), the upper corner portion (45) corresponding to a portion at which a deck upper face (43) and an outer-circumferential wall face (44) of the blade housing (40) are connected to each other, and
a curved face portion (45a) that curves toward rotation centers of the rotary blades (41), relative to the outer-circumferential wall face (44), the closer the curved face portion (45a) is to the deck upper face (43), the curved face portion (45a) being formed in the upper corner portion (45)
**characterized in that** the upper corner portion (45) is constituted by a combination of divided corner members (45Ra, 45Rb, 45Rc, 45La, 45Lb, 45Lc) that are divided at a plurality of portions in a direction in which the rotary blades (41) rotate and **in that** the curved face portion (45a) is formed in each of the divided corner members (45Ra, 45Rb, 45Rc, 45La, 45Lb, 45Lc).

2. The mower apparatus (4) according to claim 1, wherein some of the divided corner members (45Ra, 45Rb, 45Rc, 45La, 45Lb, 45Lc) provided at a plurality of portions is formed to have a shape capable of being used at a plurality of portions.

3. The mower apparatus (4) according to claim 1 or 2, wherein adjacent ones of the divided corner members (45Ra, 45Rb, 45Rc, 45La, 45Lb, 45Lc) are connected to each other by means of a joggle structure (47) that is flush with the divided corner members (45Ra, 45Rb, 45Rc, 45La, 45Lb, 45Lc) on an inner face side of the blade housing (40).

## Patentansprüche

1. Mähvorrichtung (4), umfassend:
ein Paar linker und rechter rotierender Messer (41), die angetrieben werden, um um eine senkrechte Achse zu rotieren,
eine Antriebseinheit (4A), die eine Antriebskraft auf die rotierenden Messer (41) überträgt, und
ein Messergehäuse (40), das eine Oberseite und eine äußere Umfangsseite der rotierenden Messer (41) abdeckt,
einen oberen Eckabschnitt (45) des Messergehäuses (40), wobei der obere Eckabschnitt (45) einem Abschnitt entspricht, an dem eine obere Plattenfläche (43) und eine äußere Umfangswandfläche (44) des Messergehäuses (40) miteinander verbunden sind, und
einen gekrümmter Flächenabschnitt (45a), der sich, je näher der gekrümmte Flächenabschnitt (45a) der oberen Plattenfläche (43) ist, in Bezug auf die äußere Umfangswandfläche (44) zu Rotationsmittelpunkten der rotierenden Messer (41) hin krümmt, wobei, der gekrümmte Flächenabschnitt (45a) in dem oberen Eckabschnitt (45) gebildet ist,
**dadurch gekennzeichnet, dass** der obere Eckabschnitt (45) aus einer Kombination geteilter Eckelemente (45Ra, 45Rb, 45Rc, 45La, 45Lb, 45Lc) besteht, die an mehreren Abschnitten in einer Richtung, in die die rotierenden Messer (41) sich drehen, geteilt sind, und dadurch, dass der gekrümmte Flächenabschnitt (45a) in jedem der geteilten Eckelemente (45Ra, 45Rb, 45Rc, 45La, 45Lb, 45Lc) gebildet ist.

2. Mähvorrichtung (4) nach Anspruch 1, wobei einige der an mehreren Abschnitten vorgesehenen geteilten Eckelemente (45Ra, 45Rb, 45Rc, 45La, 45Lb, 45Lc) dazu ausgebildet sind, eine Form aufzuweisen, die an mehreren Abschnitten verwendet werden kann.

3. Mähvorrichtung (4) nach Anspruch 1 oder 2, wobei benachbarte der geteilten Eckelemente (45Ra, 45Rb, 45Rc, 45La, 45Lb, 45Lc) mittels einer Sickenstruktur (47), die auf einer Innenflächenseite des Messergehäuses (40) mit den geteilten Eckelementen (45Ra, 45Rb, 45Rc, 45La, 45Lb, 45Lc) bündig ist, miteinander verbunden sind.

## Revendications

1. Appareil de tondeuse (4) comprenant :
une paire de lames rotatives gauche et droite (41) qui sont entraînées pour tourner autour d'un axe vertical ;
une unité d'entraînement (4A) qui transmet une force d'entraînement aux lames rotatives (41) ; et
un logement de lames (40) qui recouvre un côté supérieur et un côté circonférentiel externe des lames rotatives (41) ;
une partie de coin supérieure (45) du logement de lames (40), la partie de coin supérieure (45) correspondant à une partie au niveau de laquelle une face supérieure de plateforme (43) et une face de paroi circonférentielle externe (44) du logement de lames (40) sont raccordées entre elles, et
une partie de face incurvée (45a) qui s'incurve vers les centres de rotation des lames rotatives (41) par rapport à la face de paroi circonférentielle externe (44), la partie de face incurvée (45a) étant plus proche de la face supérieure de plateforme (43), la partie de face incurvée (45a) étant formée dans la partie de coin supérieure (45),
**caractérisé en ce que** la partie de coin supérieure (45) est constituée par une combinaison d'éléments de coin divisés (45Ra, 45Rb, 45Rc, 45La, 45Lb, 45Lc) qui sont divisés au niveau d'une pluralité de parties dans une direction dans laquelle les lames rotatives (41) tournent et **en ce que** la partie de face incurvée (45a) est formée dans chacun des éléments de coin divisés (45Ra, 45Rb, 45Rc, 45La, 45Lb, 45Lc).

2. Appareil de tondeuse (4) selon la revendication 1, dans lequel certains des éléments de coin divisés (45Ra, 45Rb, 45Rc, 45La, 45Lb, 45Lc) prévus au niveau d'une pluralité de parties, sont formés pour avoir une forme pouvant être utilisée au niveau d'une pluralité de parties.

3. Appareil de tondeuse (4) selon la revendication 1 ou 2, dans lequel les éléments adjacents des éléments de coin divisés (45Ra, 45Rb, 45Rc, 45La, 45Lb, 45Lc) sont raccordés entre eux au moyen d'une structure d'adent (47) encastrée avec les éléments de coin divisés (45Ra, 45Rb, 45Rc, 45La, 45Lb, 45Lc) sur un côté de face interne du logement de lames (40).
